# EUROPÄISCHE PATENTANMELDUNG

(11) **EP 3 492 386 A1**
(43) Veröffentlichungstag der Anmeldung: **05.06.2019**
(21) Anmeldenummer: 17205031.2
(22) Anmeldetag: 01.12.2017
(51) Int. Cl.: B64D 41/00

(54) **FLUGZEUG MIT STROMVERSORGUNG**

(71) Anmelder: Posch, Dietmar, 2483 Ebreichsdorf (AT)
(72) Erfinder: Posch, Dietmar, 2483 Ebreichsdorf (AT)
(74) Vertreter: Schneider, Michael

(57) **Zusammenfassung**

Flugzeug (1), aufweisend zumindest einen Windkraft-Stromgenerator (2) zur Speisung des Bord-Stromnetzes des Flugzeugs (1) mit Strom.

## Beschreibung

### Technisches Feld

Die Erfindung betrifft ein Flugzeug mit einer Stromversorgung.

### Hintergrund

Ein solches, eingangs erwähntes Flugzeug ist nach gegenwärtiger Erkenntnis mit einem Verbrennungsmotor, ggf. einer mit Flüssigtreibstoff betriebenen Turbine ausstatte, die einen Generator antreibt, der eine Batterie auflädt oder den erzeugten elektrischen Strom in das Bord-Stromnetz des Flugzeugs einspeist. Diese Form der Bereitstellung von Strom im Flugzeug ist extrem umweltschädlich und verursacht einen nicht unerheblichen Kraftstoffverbrauch. Die vorliegende Erfindung soll im Flugzeugbau und generell beim Betreiben von Flugzeugen eine neue technische Lösung zur Anwendung bringen, die ein Umdenken in der Antriebstechnologie bewirkt.

Die Erfindung hat sich vor diesem Hintergrund die Aufgabe gestellt, ein verbessertes Flugzeug bereitzustellen, sodass die vorstehend angesprochenen Nachteile beseitigt sind.

### Zusammenfassung der Erfindung

Diese Aufgabe wird durch ein Flugzeug gemäß Anspruch 1 gelöst. Der Gegenstand der Erfindung ist daher ein Flugzeug aufweisend zumindest einen Windkraft-Stromgenerator zur Speisung des Bord-Stromnetzes des Flugzeugs mit Strom. Durch die erfindungsgemäßen Maßnahmen ist nun der Vorteil erhalten, dass der Kraftstoffverbrauch eines Flugzeuges massiv gesenkt werden kann, da es möglich ist, die gewonnene elektrische Energie zum Beispiel in ein Batterie-Ladesystem einzuspeisen und die Akkus, mit denen ein Flugzeug elektrisch betrieben werden kann, während der Flug- und Fahrphasen so ständig aufzuladen. Somit ist mit der Erfindung auch ein großer Durchbruch in der Hybrid-Technologie, bei der z.B. ein Flugzeug eine Kombination aus elektrisch antreibbaren Motoren und Verbrennungsmotoren aufweist, und in der reinen Elektro-Mobilität gelungen, da das Flugzeug, das z.B. über mit Hilfe von Elektromotoren angetriebene Propeller verfügt, verbunden mit beispielsweise zusätzlich montierten Solar-Paneelen elektrische Energie erzeugen kann und somit selbst als Energiequelle für seinen eigenen Betrieb dient.

Mit dieser Erfindung kann der elektrische Betrieb für Elektromotoren um ein Vielfaches verlängert werden, da sowohl in der Flugphase wie auch beim Rollen am Flugfeld ständig elektrische Energie nachgeliefert wird und man damit die Akkus wieder mit elektrischer Energie aufladen kann. Die im Idealfall durch die Kombination aus Luftstrom und Sonneneinstrahlung gemeinsam gewonnene elektrische Energie entlastet beim Hybridantrieb des Flugzeugs das Verbrennungskraftsystem und reduziert somit den Kraftstoffverbrauch, was einerseits zu einer verlängerten Reichweite des Flugzeugs und / oder andererseits zu einem reduzierten Schadstoff-Ausstoß beiträgt. Beim rein elektrischen Antrieb wird die Reichweite des Flugzeugs erhöht.

Auch kann sowohl beim Hybridantrieb wie auch beim rein elektrischen Flugzeug beim Parken wie auch während des Betriebs (also des Fahrens / Fliegens / auch Stehens mit Hilfe der Solarpaneele) auf selbsterzeugten Strom zurückgegriffen werden, der ja in den Batterien gespeichert wurde. Es ist somit in weiten Grenzen selbst beim Stehen bzw. Parken am Rollfeld keine externe Stromversorgung nötig, was die Betriebskosten auf die Lebenszeit eines Flugzeugs umgelegt erheblich reduziert.

Weitere, besonders vorteilhafte Ausgestaltungen und Weiterbildungen der Erfindung ergeben sich aus den abhängigen Ansprüchen sowie der nachfolgenden Beschreibung.

Die Erfindung basiert auf dem Prinzip der Stromerzeugung mittels Generatoren, die durch auftretende Luftströmungen (Fahrt- und Flugwind bzw. - Luftströmung) in Rotation versetzt werden und durch diese Rotationsbewegungen elektrische Energie erzeugen. Diese nun gewonnene elektrische Energie wird mittels elektrischer Leitungen von den Generatoren in das elektrische Leitungssystem eines Flugzeuges transportiert. Die Generatoren können je nach Bauart des Flugzeuges an verschiedenen Stellen angebracht werden, worauf nachfolgend noch im Detail eingegangen ist.

Gemäß einem ersten Aspekt der Erfindung weist das Flugzeug zwei große im mittleren Bereich des Flugzeugrumpfes angeordnete vordere Tragflächen angeordnet bzw. sich erstreckend an der linken und rechten Seite des Flugzeugrumpfes auf, wobei jede der Tragflächen zumindest einen Generator trägt.

Gemäß einem weiteren Aspekt der Erfindung weist das Flugzeug zwei kleine am hinteren Bereich des Flugzeugrumpfes angeordnete hintere Tragflächen auf, wobei jede der Tragflächen zumindest einen Generator trägt.

Gemäß einem weiteren Aspekt der Erfindung weist das Flugzeug zumindest ein Seitenleitwerk auf, wobei das Seitenleitwerk zumindest einen Generator trägt.

Gemäß einem weiteren Aspekt der Erfindung ist der Generator an der Außenseite der Tragfläche und / oder an der Außenseite des Leitwerks angebracht.

Gemäß einem weiteren Aspekt der Erfindung weist das Flugzeug einen Flugzeugrumpf auf, wobei der Flugzeugrumpf zumindest einen Generator trägt.

Gemäß einem weiteren Aspekt der Erfindung ist der Generator an der Außenseite des Flugzeugrumpfes, insbesondere an der obersten oder an der untersten Position des Flugzeugrumpfes angeordnet.

Die erwähnten möglichen Montage-Stellen sind in der detaillierten Beschreibung der Figur skizziert, welche ein handelsübliches Linienflugzeug zeigt, das so auch üblicherweise in dieser Form hauptsächlich verwendet wird. Bei einer Bauform eines Flugzeuges solchen oder ähnlichen Typs bieten sich auf jeden Fall die beiden großen Tragflächen für eine Montagefläche an. Hier ist es jedenfalls günstig, Generatoren anzubringen, da die beiden Tragflächen sowohl auf ihrer Oberseite als auch auf ihrer Unterseite sehr starken Luftströmungen ausgesetzt sind und große Flächen für die Montage der Generatoren vorhanden sind. Weiterhin bieten sich auch die kleineren Tragflügel am Heck des Flugzeuges für die Montage der Generatoren an. Hier ist zwar eindeutig weniger Platz vorhanden als bei den großen Tragflügeln vorne, aber auch die hinteren Tragflügel werden ebenfalls sehr gut mit Fahrt- bzw. Flugwind umströmt und sind daher auch als idealer Montage-Ort für Generatoren anzusehen. Auch das Dach bietet sich an, um Generatoren sowohl innen als auch außen anzubringen.

Gemäß einem weiteren Aspekt der Erfindung weist der außenliegende Generator eine mit einer Schutzvorrichtung versehene Einlassöffnung, insbesondere als feinmaschiges Gitter ausgebildet, besonders bevorzugt ausgelegt zum Schutz gegen Vogelschlag, auf.

Gemäß einem anderen Aspekt der Erfindung ist zumindest ein Generator innerhalb der Flugzeughülle angeordnet.

Der Generator kann innerhalb einer der Tragflächen und / oder innerhalb des Leitwerks und / oder innerhalb des Flugzeugrumpfes angeordnet sein.

Bevorzugt weißt dann die Flugzeughülle zumindest eine nach vorne hin offene Einlassöffnung zum Einströmen eines den Generator antreibenden Luftstroms hin zu dem Generator und eine nach hinten hin offene Auslassöffnung zum Abführen des den Generator antreibenden Luftstroms auf, wobei insbesondere die Einlassöffnung in Flugrichtung vor der Auslassöffnung angeordnet ist.

Besonders bevorzugt ist zwischen der Einlassöffnung und der Auslassöffnung der Flugzeughülle zumindest ein Strömungskanal zum Leiten des Luftstroms innerhalb der Flugzeughülle hin zu dem Generator bzw. weg von dem Generator ausgebildet.

Gemäß einem weiteren Aspekt der Erfindung sind die Einlassöffnungen und / oder die Auslassöffnungen durch mit Hilfe des Bordcomputers steuerbare Verschlussmittel, insbesondere Klappen oder Schieber, verschließbar, insbesondere in Abhängigkeit vom Flugmanöver und / oder vom Strombedarf im Flugzeug.

Besonders bevorzugt weist das Flugzeug einen Bordcomputer auf, wobei der mindestens eine Generator über Kabel bzw. elektrische Leitungen mit einem Stromverteilungs-System zum Verteile des mit Hilfe des Generators erzeugten Stroms an elektrische Verbraucher und / oder Stromspeicher verbunden ist und der Bordcomputer zum Ansteuern des Stromverteilungs-Systems zwecks optimierter Nutzung des erzeugten Stroms in Abhängigkeit vom Energiebedarf der einzelnen Verbraucher und / oder dem Ladezustand der Stromspeicher und / oder dem jeweiligen Flugmanöver ausgebildet ist. Von großer Bedeutung ist jedenfalls, dass die Verteilung und Bereitstellung der erzeugten elektrischen Energie im elektrischen System eines Flugzeugs mittels eines Bordcomputers und des besagten Stromverteilungs- bzw. Energiemanagement-Systems so gesteuert wird, dass sie zu jeder Zeit angepasst an den jeweiligen Energiebedarf der verschiedenen Systemkomponenten (elektrische Verbraucher und elektrische (Strom-)Speicher) dort zur Verfügung steht und somit optimal genutzt wird.

Gemäß einem weiteren Aspekt der Erfindung ist es von Vorteil, wenn das Flugzeug einen Stromspeicher aufwiest, der mit Hilfe des Stroms aufladbar ist und / oder das Flugzeug einen elektrischen Antrieb zur Fortbewegung des Flugzeugs am Boden, bevorzugt jedoch auch in der Luft, aufweist, der entweder direkt mit Hilfe des erzeugten Stroms oder mit Hilfe des gespeicherten Strom betreibbar ist.

Falls nun die Generatoren innen angebracht werden, empfiehlt es sich wie erwähnt, sie in einen Luftkanal zu montieren, in den der Fahrt- bzw. Flugwind einströmen und am Ende des Luftkanals wieder ins Freie ausströmen kann. Ebenfalls würde sich der Rumpf eines Flugzeuges als geeigneter Montage-Ort für Generatoren anbieten. Hier würde für innen liegende Generatoren das Gleiche gelten wie bei den Generatoren, die unter dem Dach montiert werden. Zum Schluss sei noch die Möglichkeit eines Anbringungsortes an der Spitze des Flugzeuges nicht außer Acht gelassen. Hier gelten für innen liegende Generatoren ebenfalls dieselben Voraussetzungen wie für die innen liegenden Generatoren am Dach und am Rumpf des Flugzeuges.

Bei all diesen Anbringungsorten für die Generatoren ist es jedenfalls von Vorteil, einen besonderen Schutz vorzusehen, der verhindern soll, dass ungewollte Objekte die Generatoren, die elektrischen Leitungen oder auch die Lüftungskanäle beschädigen können. Das bedeutet, dass vor den Generatoren oder den Einlässen der Lüftungskanäle ein sehr feinmaschiges und stabiles Gitter montiert sein kann, damit ein ungewolltes Eindringen von Fremdkörpern (zum Beispiel Vögel) erfolgreich verhindert wird und damit einer Beschädigung der Anlagen präventiv vorgebeugt wird.

Die Größe und das Gewicht der Generatoren wie auch der Typ bzw. die Bauart des zur Anwendung kommenden Generators sind nicht im Detail spezifiziert, da diese Parameter von der Größe, der Bauart und der Stabilität des jeweiligen Flugzeuges wie auch vom tatsächlichen Montageort im oder am Flugzeug abhängig sind. Grundsätzlich gibt es eine Vielzahl von handelsüblichen Generatoren, die allesamt die funktionale Eignung besitzen, für den beschriebenen Einsatzzweck zur Anwendung zu kommen.

Da nun geklärt ist, wo die Generatoren montiert werden können, wie sie sicher betrieben werden können und wie die dadurch produzierte elektrische Energie sicher in das Stromnetz eines Flugzeuges eingespeist werden kann, wird an dieser Stelle abschließend nochmals auf die eingangs erwähnte vorteilhafte Verwendung der gewonnenen elektrischen Energie hingewiesen.

Der Anlass und die Begründung für die Ansprüche, die gestellt werden, resultieren daraus, dass die angeführten Montagestellen für die Generatoren als geeignet erscheinen und hier bestmöglich die eintreffenden Luft-Strömungs-Kräfte genützt werden können, um elektrische Energie zu erzeugen. Weiterhin wird auch der Anspruch gestellt, dass die zu montierenden Generatoren mittels eines Gitters vor Beschädigungen geschützt werden und/oder dass die Lüftungskanäle je nach Bedarf, insbesondere gesteuert durch besagten Bordcomputer, besonders bevorzugt zur Erzielung einer optimalen Flugstabilität des Flugzeugs, geschlossen oder geöffnet werden können oder ihr Öffnungsgrad daran angepasst eingestellt werden kann.

### Figurenkurzbeschreibung

Die Erfindung wird im Folgenden unter Hinweis auf die beigefügte Figur anhand von Ausführungsbeispielen noch einmal näher erläutert, auf welche die Erfindung jedoch nicht beschränkt ist. Es zeigt auf schematische Weise:

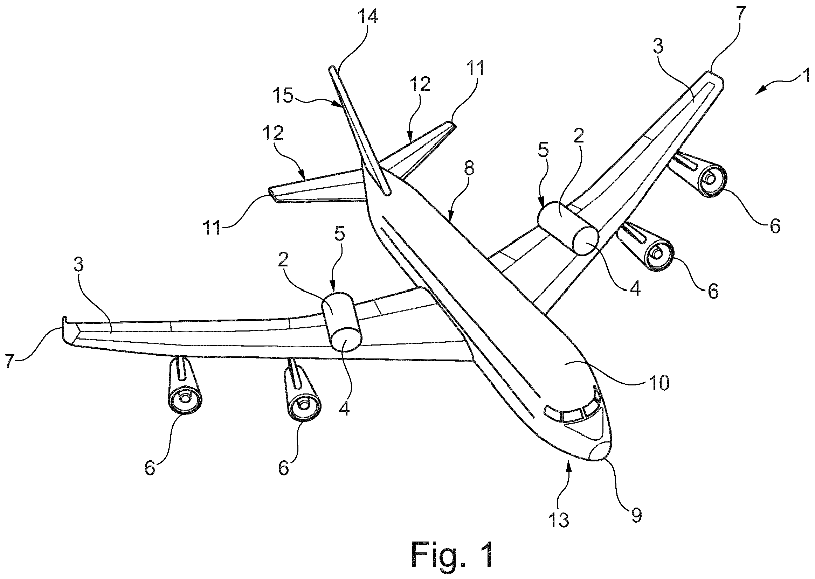

- Fig. 1: ein Flugzeug mit Windkraft-Stromgenerator zur Stromerzeugung.

### Beschreibung der Ausführungsbeispiele

Die Figur 1 zeigt ein Flugzeug 1, das zwei mit Windkraft betreibbare Windkraft-Stromgeneratoren 2 aufweist, die an der Oberseite der großen, vorderen Tragflächen 3 angebracht sind. Sie weisen nach vorne in Flugrichtung offene Einlassöffnungen 4 und nach hinten gerichtete Auslassöffnungen 5 auf. Ihre Form ist im wesentlichen zylinder- oder röhrenförmig, sodass sich im Inneren (nicht im Detail dargestellt) ein durch einen Luftstrom - also den Flug- bzw. Fahrtwind oder den am Boden auf das stehende Flugzeug einwirkenden Wind - antreibbares Kraftübertragungselement um eine zentrale Achse rotierend bewegen kann. Dies können Schaufelräder oder auch Propeller-Blätter und dergleichen sein. Mit Hilfe der luftstrom-verursachten Rotationsbewegung wird im Generator der Strom für das Bord-Stromnetz des Flugzeugs 1 generiert. Der Strom kann direkt (über entsprechende Verkabelung und gängige elektronische Bauteile bzw. Baugruppen) in das Bord-Stromnetz eingespeist werden oder vollständig bzw. teilweise zur Ladung von aufladbaren Batterien oder Akkumulatoren des Flugzeugs 1 dienen, die im Rumpf bzw. einer anderen geeigneten Stelle, wie z.B. Flügel oder Leitwerk, des Flugzeugs 1 (je nach Flugzeugtyp und / oder Bauart) untergebracht sind.

Die beiden Generatoren 2 können jedoch auch unter den Tragflächen 3 und / oder 11 angebracht sein.

Sind die Generatoren 2 oberhalb der Tragfläche 3 und / oder 11 angebracht, kann ihre Positionierung genau oberhalb der Triebwerke 6 günstig sein. Auch können die hin zur Flügelspitze 7 positioniert sein. Bevorzugt sind sie jedoch - wie in der Figur 1 dargestellt - benachbart zu den Triebwerken 6 der großen Tragflächen 3 zwischen Treibwerk 6 und Rumpf 8 angebracht.

Der Windkraft-Stromgenerator 2 kann jedoch auch im Rumpf 8 des Flugzeugs 1 positioniert sein, was jedoch nicht im Detail dargestellt ist. Zu diesem Zweck muss die Flugzeughülle zumindest eine nach vorne hin offene Einlassöffnung und eine nach hinten offene Auslassöffnung, ggf. auch zumindest einen internen Strömungskanal, aufweisen, damit der Luftstrom, der das Flugzeug 1 in seiner Bewegung umströmt, den Generator 2 antreiben kann. Die Einlassöffnung kann auch vielteilig, also bestehend aus vielen relativ kleinen Öffnungen in der Flugzeughülle, ausgebildet sein und somit zugleich eine Schutzwirkung ausüben.

Im Detail kann die Einlassöffnung zu beiden Seiten (links und rechts) des Rumpfes 8, also zweiteilig ausgebildet sein. Auch kann sie an der Flugzeugspitze 9 oder auch am Dach 10 (Oberseite des Rumpfes 8) oder an der Unterseite 13 des Flugzeugs 1 lokalisiert sein.

Der Windkraft-Stromgenerator 2 kann jedoch auch - ähnlich der Positionierung auf den großen, vorderen Tragflächen 3, zweiteilig ausgebildet sein, sodass jeweils ein mit Windkraft betreibbarer Generator 2 auf oder unter den kleinen Tragflächen 11 positioniert ist, z.B. im Bereich der mit Pfeilen 12 angedeuteten Positionen.

Auch kann der Windkraft-Stromgenerator 2 im Seitenleitwerk 14 integriert sein oder an dem Seitenleitwerk 14 links- und rechtsseitig jeweils ein Generator 2 angebracht sein. Eine beispielhafte Position dafür ist durch einen Pfeil 15 angedeutet.

Ganz generell und unabhängig von der exakten Positionierung kann es auch von Vorteil sein, wenn nicht nur ein einziger oder gar zwei relativ große Generatoren 2, sondern eine Vielzahl solcher relativ klein ausgebildeter Generatoren 2 vorgesehen ist. Dies ermöglicht eine verbesserte Lastverteilung entlang der Flugzeugstruktur und kann auch die Integration der Generatoren 2 in die Flügelstruktur oder die Flugzeughülle, also die Flügel 3 oder 11 oder den Flugzeugrumpf 8 erleichtern. Dies kann strömungstechnische Vorteile gegenüber einer Anordnung von relativ großen Generatoren 2 außerhalb der Flugzeughülle mit sich bringen. Auch kann die örtliche Verteilung kleiner Generatoren 2 zur Ausfallsicherheit der Stromversorgung beitragen und eine bessere Nutzung von Freiräumen innerhalb des Rumpfes 8 oder der Flügeln 3, 11 ermöglichen.

Demgegenüber haben außenliegende Generatoren 2 den Vorteil, dass sie das Innere des Flugzeugs 1 nicht belegen, also dort keinen Raum okkupieren, was insbesondere bei kleineren Flugzeugtypen vorteilhaft sein kann.

Bei relativ großen Generatoren 2 ist auch drauf zu achten, dass die Einlassöffnungen großflächig gegen ein Eindringen von Objekten z.B. durch ein Vorsehen eines feinmaschigen Gitters oder einer Blendenstruktur (nicht im Detail dargestellt) geschützt sind. Bei kleineren, entlang der Flugzeughülle oder sogar innerhalb der Flugzeughülle verteilt angeordneten Generatoren 2, die ggf. über eine Vielzahl von Einlassöffnungen mit Fahrtwind gespeist werden, kann auf solche zusätzlichen Sicherungsmaßnahmen bei den Einlassöffnungen ggf. verzichtet werden.

Auch können bei innenliegenden Generatoren die Einlass- und / oder Auslassöffnungen je nach Bedarf durch Klappen oder Schieber geöffnet oder geschlossen werden, was einerseits eine Auswirkung auf die mit Hilfe der Generatoren 2 erzeugte Strommenge hat, anderseits jedoch auch zur Steuerung oder Beeinflussung des Flugverhaltens des Flugzeugs 1 genutzt werden kann. Andererseits können die Zustände dieser Klappen oder Schieber auch in Abhängigkeit von Flugmanövern gesteuert werden, wenn dies für das betreffende Flugmanöver nötig ist. So kann beispielsweise beim Steigflug die Durchströmung durch verschlossene Luftkanäle verhindert werden, sodass die volle Schubleistung des Flugzeugs 1 möglichst verlustfrei in Vorwärts und Aufwärtsbewegung umsetzbar ist. Demgegenüber können die Luftkanäle beim Sinkflug voll geöffnet werden, um den am Boden benötigten Strom zu produzieren und zu speichern.

Das derart zur eigenen Stromversorgung ausgerüstete Flugzeug 1 kann bereits beim Rolle auf der Startbahn den Fahrwind als Windkraft zum Antrieb des Windkraft-Stromgenerators 2 nutzen und seinen eigenen Bordstrom damit produzieren. Auch kann ein Flugzeug, das auf seinem Parkplatz abgestellt ist, bei günstiger Windrichtung seinen eigenen Bordstrom generieren. Insbesondere in der Luft fliegend, also wenn bedingt durch die hohe Geschwindigkeit des Flugzeugs die Kraft des Luftstroms, der auf den / die Windkraft-Stromgeneratoren 2 wirkt, sein Maximum erreicht, kann die damit produzierte Energie entweder zum Betrieb des elektrischen Antriebs des Flugzeugs diene und / oder das Bord-Strom-Netz, ggf. auch inklusive Ladesystem für die Batterieladung versorgen.

Es wird abschließend noch einmal darauf hingewiesen, dass es sich bei der vorangehend detailliert beschriebenen Figur nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Flugzeug (1), aufweisend zumindest einen Windkraft-Stromgenerator (2) zur Speisung des Bord-Stromnetzes des Flugzeugs (1) mit Strom.

2. Flugzeug (1) nach Anspruch 1 aufweisend zwei große im mittleren Bereich des Flugzeugrumpfes (9) angeordnete vordere Tragflächen (3) angeordnet an der linken und rechten Seite des Flugzeugrumpfes (8), wobei jede der Tragflächen (3) zumindest einen Generator (2) trägt.

3. Flugzeug (1) nach einem der vorangehenden Ansprüche 1 oder 2 aufweisend zwei kleine am hinteren Bereich des Flugzeugrumpfes (8) angeordnete hintere Tragflächen (11), wobei jede der Tragflächen zumindest einen Generator (2) trägt.

4. Flugzeug (1) nach einem der vorangehenden Ansprüche aufweisend zumindest ein Seitenleitwerk (14), wobei das Seitenleitwerk (14) zumindest einen Generator (2) trägt.

5. Flugzeug (1) nach einem der vorangehenden Ansprüche 2 bis 4, wobei der Generator (2) an der Außenseite der Tragfläche (3, 11) und / oder an der Außenseite des Leitwerks (14) angebracht ist.

6. Flugzeug (1) nach einem der vorangehenden Ansprüche aufweisend einen Flugzeugrumpf (8), wobei der Flugzeugrumpf (8) zumindest einen Generator (2) trägt.

7. Flugzeugt (1) nach Anspruch 6, wobei der Generator (2) an der Außenseite des Flugzeugrumpfes (8), insbesondere an der obersten oder an der untersten Position des Flugzeugrumpfes (8) angeordnet ist.

8. Flugzeug (1) nach einem der vorangehenden Ansprüche 2 bis 7, wobei der außenliegende Generator (2) eine mit einer Schutzvorrichtung versehene Einlassöffnung (6), insbesondere als feinmaschiges Gitter ausgebildet, besonders bevorzugt ausgelegt zum Schutz gegen Vogelschlag, aufweist.

9. Flugzeug (1) nach einem der vorangehenden Ansprüche, wobei zumindest ein Generator (2) innerhalb der Flugzeughülle angeordnet ist.

10. Flugzeug (1) nach Anspruch 9, wobei der Generator innerhalb einer der Tragflächen (3, 11) und / oder innerhalb des Leitwerks (14) und / oder innerhalb des Flugzeugrumpfes (8) angeordnet ist.

11. Flugzeug (1) nach einem der Ansprüche 8 bis 9, wobei die Flugzeughülle zumindest eine nach vorne hin offene Einlassöffnung zum Einströmen eines den Generator (2) antreibenden Luftstroms hin zu dem Generator (2) und eine nach hinten hin offene Auslassöffnung zum Abführen des den Generator (2) antreibenden Luftstroms aufweist, wobei insbesondere die Einlassöffnung in Flugrichtung vor der Auslassöffnung angeordnet ist.

12. Flugzeug (1) nach einem der Ansprüche 9 oder 11, wobei zwischen der Einlassöffnung und der Auslassöffnung der Flugzeughülle zumindest ein Strömungskanal zum Leiten des Luftstroms innerhalb der Flugzeughülle hin zu dem Generator (2) bzw. weg von dem Generator (2) ausgebildet ist.

13. Flugzeug (1) nach einem der Ansprüche 9 bis 12, wobei die Einlassöffnungen und / oder die Auslassöffnungen durch mit Hilfe des Bordcomputers steuerbare Verschlussmittel, insbesondere Klappen oder Schieber verschließbar sind, insbesondere in Abhängigkeit vom Flugmanöver und / oder vom Strombedarf im Flugzeug (1).

14. Flugzeug (1) nach einem der vorangehenden Ansprüche aufweisend einen Bordcomputer, wobei der mindestens eine Generator (2) über Kabel bzw. elektrische Leitungen mit einem Stromverteilungs-System zum Verteile des mit Hilfe des Generators erzeugten Stroms an elektrische Verbraucher und / oder Stromspeicher verbunden ist und der Bordcomputer zum Ansteuern des Stromverteiler-Systems zwecks optimierter Nutzung des erzeugten Stroms in Abhängigkeit vom Energiebedarf der einzelnen Verbraucher und oder dem Ladezustand der Stromspeicher und / oder dem jeweiligen Flugmanöver ausgebildet ist.

15. Flugzeug (1) nach einem der vorangehenden Ansprüche,
das einen Stromspeicher aufwiest, der mit Hilfe des Stroms aufladbar ist und / oder
das einen elektrischen Antrieb zur Fortbewegung des Flugzeugs (1) am Boden, bevorzugt jedoch auch in der Luft, aufweist, der entweder direkt mit Hilfe des erzeugten Stroms oder mit Hilfe des gespeicherten Stroms betreibbar ist.
